# EUROPEAN PATENT SPECIFICATION

(11) **EP 0 832 933 B1**
(45) Date of publication and mention of the grant of the patent: **10.05.2000**
(21) Application number: 97307107.9
(22) Date of filing: 12.09.1997
(51) Int. Cl.: C08L 55/02

(54) **Compositions based on ABS polymerizates**
Zusammensetzungen auf Basis von ABS Polymerisat
Compositions à base de polymérisats ABS

(30) Priority: 25.09.1996 FR 9611672
(43) Date of publication of application: 01.04.1998
(73) Proprietor: GENERAL ELECTRIC COMPANY, Schenectady, NY 12345 (US)
(72) Inventor: Guilland, Jean-Francois Henri, 95290 L'Isle Adam (FR); Merle, Olivier, Clermont - FD, 93000 (FR); Lecomte, Yves, 60600 Breuil, Le Vert (FR)
(74) Representative: Szary, Anne Catherine, Dr.

(56) References cited:
- EP-A- 0 203 634
- EP-A- 0 523 599
- EP-A- 0 536 483
- EP-A- 0 564 241
- DE-A- 4 301 678
- GB-A- 1 221 396
- GB-A- 1 477 273
- US-A- 3 954 903
- US-A- 4 174 325
- US-A- 4 238 572
- US-A- 4 239 796
- US-A- 4 753 986

## Description

The present invention relates in general to compositions based on ABS polymerizates and on their blends, and to the flexible products obtained by calendering, extrusion, blow-extrusion, rotational moulding, injection moulding, compression moulding, transfer moulding or any other conventional process for converting these compositions, in particular to films, sheets and flexible foams.

Compositions based on ABS polymerizates or their blends are difficult to convert by extrusion or calendering because of their rheological characteristics, in particular their low fluidity when heated. The products obtained by extrusion or calendering of these compositions are generally rigid. Furthermore, it is very difficult, or even impossible, to obtain from these compositions flexible products of satisfactory quality, in particular in the form of foam.

To improve the fluidity of these compositions when heated it has already been proposed to incorporate therein conventional plasticizers such as thermoplastic polyurethanes, caprolactones, phthalate monomers, adipate monomers and polyphthalates. Thus, document DE-A-43 01 678 teaches the addition, as plasticizers, to ABS powders, of phthalate monomers such as diisodecyl phthalate, di-2-ethylhexyl phthalate and diisononyl phthalate, adipate monomers such as di-2-ethylhexyl adipate and phthalate polymers. Although the addition of these plasticizers improves the characteristics of the compositions, the products obtained from these compositions remain relatively rigid, as shown by the relatively high values of Shore D hardness.

It would therefore be desirable to develop compositions based on ABS polymerizates or on their blends, which have rheological properties, and in particular a melt index when heated, permitting easy conversion of these compositions, and which result in flexible extruded or calendered products which have high elongations and a low hardness.

It has now been found that by adding an effective quantity of a specific class of polyesters it is possible to formulate compositions based on ABS polymerizates and on their blends, which exhibit rheological characteristics, in particular of fluidity when heated, greatly facilitating their conversion and which make it possible to obtain flexible extruded or calendered products, including products in the form of foam, exhibiting exceptional elongations and remarkably low hardness values.

According to the invention the compositions include:
A - 100 parts by weight of an ABS polymerizate or of a blend of ABS polymerizate; and
B - 5 to 100 parts by weight of at least one polyester corresponding to the general formula: 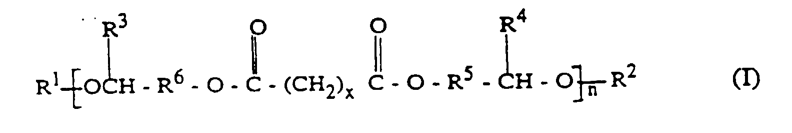 in which:
   R¹ and R², which are identical or different, denote a hydrogen atom or a C₁-C₂₀ alkyl radical;
   R³ and R⁴, which are identical or different, denote a hydrogen atom or a C₁-C₄ alkyl radical;
   R⁵ and R⁶ denote a C₁-C₆ alkylene radical, preferably a C₁-C₆ polymethylene radical and, better, R⁵ being a -CH₂-CH₂- radical and R⁶ being a -CH₂- radical;
   x is an integer from 1 to 4; and
   n has a value such that the number-average molecular mass Mn of the polyester measured by gel permeation chromatography, is between 800 and 7000, preferably 1000 and 5000 and, better, 2000 and 3000.

Within the scope of the present invention the ABS polymerizates include acrylonitrile-butadiene-styrene (ABS) polymerizates, as well as acrylonitrile-styrene-methyl or butyl acrylate (ASA) polymerizates, styrene-butadiene rubber (SBR) polymerizates, acrylonitrile-butadiene rubber (NBR) polymerizates and their mixtures. Among the ABS polymerizates there may be mentioned polymerizates with a styrene-acrylonitrile (SAN), methyl acrylate-styrene-acrylonitrile, alpha-methylstyrene-acrylonitrile (AMSAN), alpha-methylstyrene-methyl methacrylate-acrylonitrile, N-phenylmaleimide-acrylonitrile-styrene (NPMI), N-phenylmaleimide-styrene and N-phenylmaleimide-acrylonitrile matrix.

The ABS polymerizates which can be used in the present invention and methods for their preparation are well known in the art and are described, inter alia, in documents EP-A-0 248 308, DE-A-2 259 565 and US-A-3 130 177.

The ABS polymerizates are polymerizates in which the following are polymerized by grafting onto a rubber: either a monomer of styrene and methyl methacrylate, or a monomer mixture of 95-50 % by weight of styrene, α-methylstyrene, methyl methacrylate or mixtures thereof and 5-50 % by weight of acrylonitrile, methyl methacrylate, maleic anhydride, N-substituted maleimides or mixtures thereof. The rubbers which can be used are in particular polybutadiene, polybutadiene/styrene copolymerizates with up to 30 % by weight of polymerized styrene, butadiene and acrylonitrile copolymerizates with 20 % by weight of acrylonitrile and butadiene copolymerizates with up to 20 % by weight of a lower alkyl ester of acrylic or methacrylic acid (for example methyl acrylate, ethyl acrylate, methyl methacrylate and ethyl methacrylate).

The ABS graft polymerizates contain 5 to 80 % by weight, better from 20 to 70 % by weight of rubber and 95 to 20 % by weight, better from 80 to 30 % by weight of grafted polymerized monomers.

ABS polymerizates obtained by polymerization by grafting polybutadiene with styrene and acrylonitrile monomers are particularly recommended.

More particularly in these recommended ABS polymerizates the sum of the styrene plus acrylonitrile monomers which is introduced during the grafting of the polybutadiene is between 30 and 70 % by weight with a styrene/acrylonitrile ratio which can vary from 9/1 to 3/2, combined with 70 to 30 % by weight of polybutadiene.

The blends of ABS polymerizates which can be used in the present invention include, inter alia, the ABS polymerizate/SAN copolymer, ABS polymerizate/poly(butylene terephthalate), ABS polymerizate/polyurethane, ABS polymerizate/polycarbonate, ABS polymerizate/polyamide, ABS polymerizate/poly(ethylene terephthalate), ABS polymerizate/polyolefin (in particular polyethylene and polypropylene) and ABS polymerizate/polyester (in particular poly(methyl methacrylate) blends.

The blends generally contain 10 to 90 % by weight, preferably 20 to 80 % by weight, still better 50 to 80 % by weight of ABS polymerizate in relation to the total weight of the blend.

The recommended blends according to the invention are the ABS/SAN blends.

The polyesters constituting the component (B) of the compositions according to the invention correspond to the general formula: 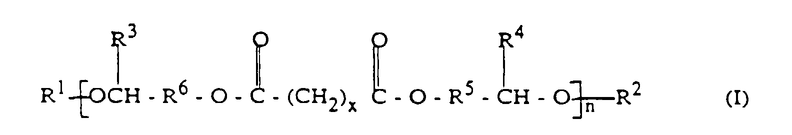 in which:
R¹, R², R³, R⁴, R⁵, R⁶, x and n are defined as above.
R¹ and R² preferably denote hydrogen or a C₁-C₁₀ alkyl radical such as a methyl, ethyl, propyl, butyl, pentyl, hexyl, heptyl, octyl, nonyl radical or the like.
R³ and R⁴ preferably denote hydrogen or a methyl group.
R⁵ is preferably a C₁-C₆ polymethylene radical and, better, the -CH₂-CH₂- radical and R⁶ is a C₁-C₆ polymethylene radical and, better, the -CH₂- radical.

As indicated above, x is an integer from 2 to 6 and is preferably equal to 4.

The value of n is preferably such that the number-average molecular mass Mn, measured by gel permeation chromatography (GPC), is between 800 and 7000, preferably 1000 to 5000, still better between 2000 and 3000.

The polyesters which are recommended in the present invention are the polyadipates corresponding to the formula: 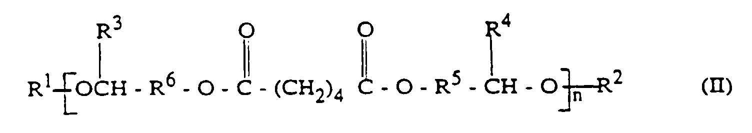 in which:
R¹, R², R³, R⁴, R⁵, R⁶ and n are defined as above.

The polyadipates of formula (II) are commercially available compounds which are sold under the name Santicizer® by the company Monsanto, Ultramol® M by the company Bayer and DIDA® by the company Henkel.

A polyadipate which is particularly recommended is the polyadipate of formula: 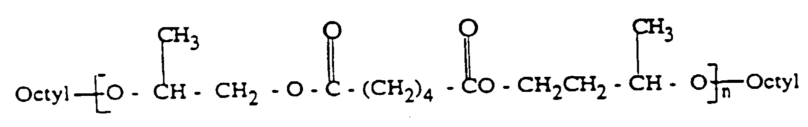 where n has a value such that the number-average molecular mass Mn is equal to 2700, as measured by GPC (Mw = 4600, P = 1.7).

This product is marketed under the name Santicizer® 409 A by the company Monsanto.

As indicated above, the compositions according to the invention contain, per 100 parts of component (A), 5 to 100 parts by weight of polyester, preferably 5 to 75 parts by weight, better 30 to 60 parts by weight, and, still better, 50 parts by weight.

When the compositions according to the invention contain 5 to 20 parts by weight of polyester, then flexible products which have a high elongation and a low hardness are obtained by extrusion, calendering, blow-extrusion, rotational moulding, injection moulding, compression moulding, transfer moulding or any other conventional conversion process. Not only is it possible to obtain a flexible product from the compositions of the invention, but it is also possible to obtain a product in the form of foam.

The compositions for the manufacture of flexible products in the form of foam preferably contain 20 or more parts, better 30 to 60 parts, by weight of polyester of formula (I).

Any chemical or physical foaming agents may be employed for manufacturing the compositions for foam according to the invention.

The chemical foaming agents are compounds or mixtures of compounds which release gas by chemical reaction, in general by thermal decomposition. The chemical foaming agents are generally solid compounds.

Among the chemical foaming agents there may be mentioned alkali metal carbonates like sodium carbonate, sodium bicarbonate, ammonium carbonate and ammonium bicarbonate, azo compounds such as azodicarboxylic acid diamide, diazo compounds, N-nitroso compounds, sulphonylhydrazides, azides, triazoles, tetrazoles, sulphonylsemicarbazides, urea derivatives, guanidine derivatives and esters and combinations of these compounds.

Among the physical foaming agents there may be mentioned aliphatic and halogenated hydrocarbons (including Freons), alcohols of low boiling point, ethers, ketones and aromatic hydrocarbons.

When chemical foaming agents are employed, these foaming agents are mixed with the composition generally before any conversion. The quantity of chemical foaming agents introduced into the composition must be effective to obtain a foam and quite obviously depends on the final density desired for the foam. The quantity of foaming agents is generally between 0.1 and 10 parts relative to the total weight of the composition.

When physical foaming agents are employed, they are generally introduced into the composition during extrusion, as is well known.

The compositions according to the invention may also contain, in the usual quantities, adjuvants which are generally employed in ABS polymerizate compositions, such as lubricants, pigments, dyes, UV stabilizers, antioxidants, antistatic agents, coupling agents, impact strength modifiers, flame retardants, extending and/or reinforcing fillers and odorants.

Among the lubricants which can be employed in the compositions of the present invention there may be mentioned, by way of example, magnesium stearate, zinc stearate, polyethylene wax, paraffin wax, ethylene propylene oxide wax, butyl stearate, glycerol monostearate, barium stearate, sodium stearate, stearyl alcohol and octyl behenate.

Among the inorganic fillers that can be employed in the compositions of the present invention there may be mentioned talc, barium sulphate, calcium carbonate and magnesium aluminium hydroxycarbonate.

The flame retardants that can be employed in the compositions of the present invention are any flame retardant or mixture of flame retardants which is known to impart a flame-retardant character to the compositions based on ABS polymerizates. Among the flame retardants there may be mentioned organic flame-retardant compounds such as tetrabromobisphenol, bistribromophenoxyethane, polybromodiphenyl ether, polybromophenol, polybromophenyl alkyl ethers, polybromobenzyl acrylate or polyacrylate, polybromocyclododecane, polybromostyrene, polybromophenylmaleimide, brominated epoxy monomers or epoxy polymers and copolycarbonates derived from a halosubstituted diphenol and from a diphenol, the halogen being preferably chlorine or bromine.

The halogenated organic flame retardant is furthermore preferably employed in combination with a synergistic compound such as an antimony compound, for example antimony oxide.

The compositions of the present invention may also contain dyes and pigments such as, for example, titanium oxide, ultramarine blue and carbon black.

The following examples are intended to illustrate the invention. Unless stated otherwise, all the percentages and parts in the examples are expressed by weight.

### Examples 1 to 3 and comparative examples A to K

The compositions shown in Table I below were prepared merely by mixing by means of a Haake 9000 mixer.

The compositions in Table I were extruded by means of a single- or twin-screw extruder at 170-190°C and Young's modulus and Shore D hardness were measured on test pieces of each of the compositions. The results are also shown in Table I.

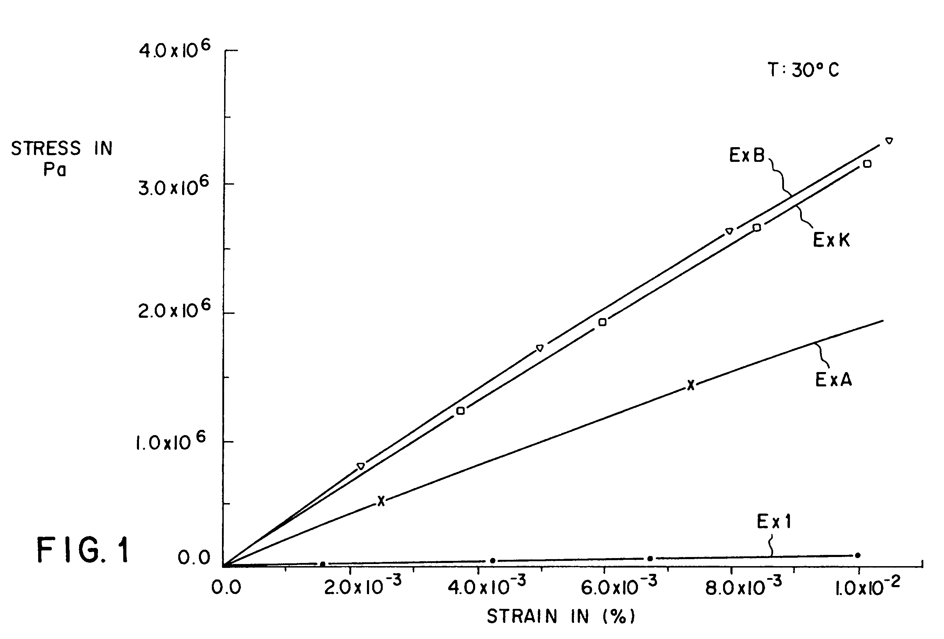

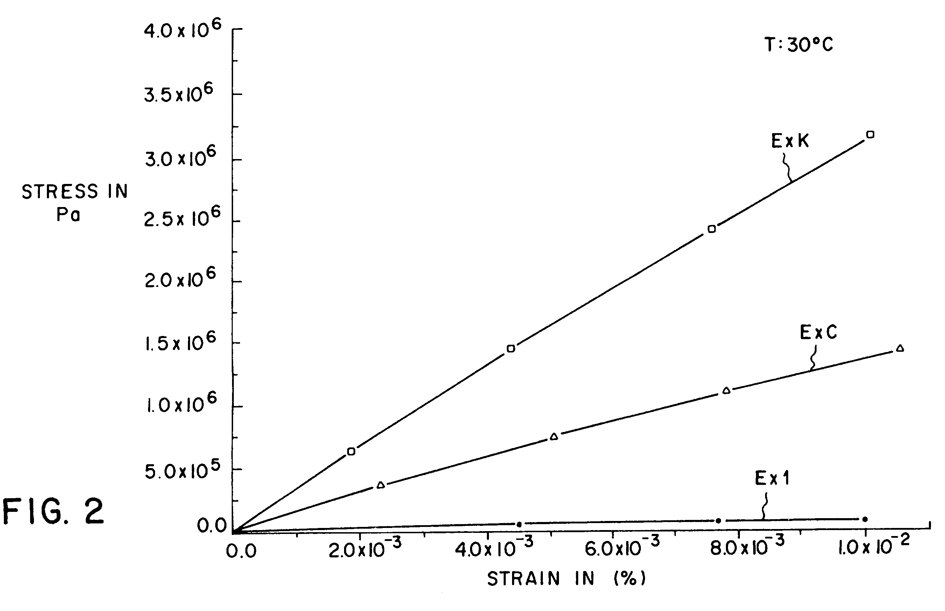

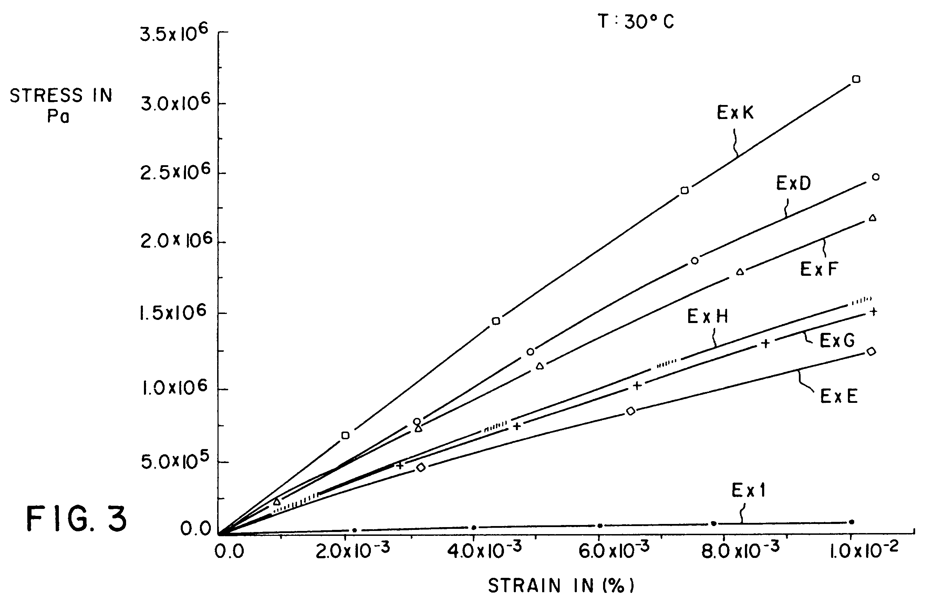

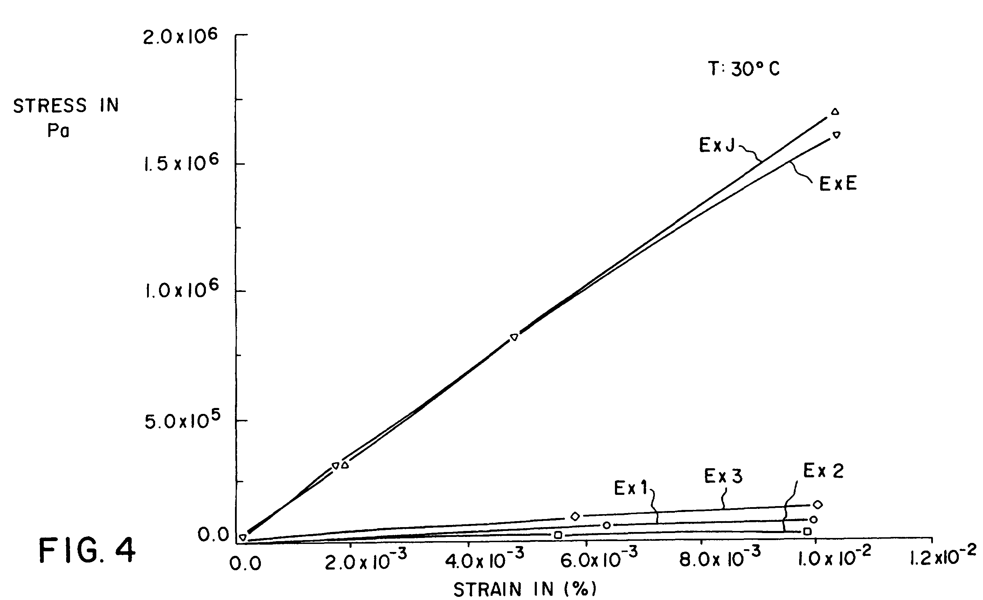

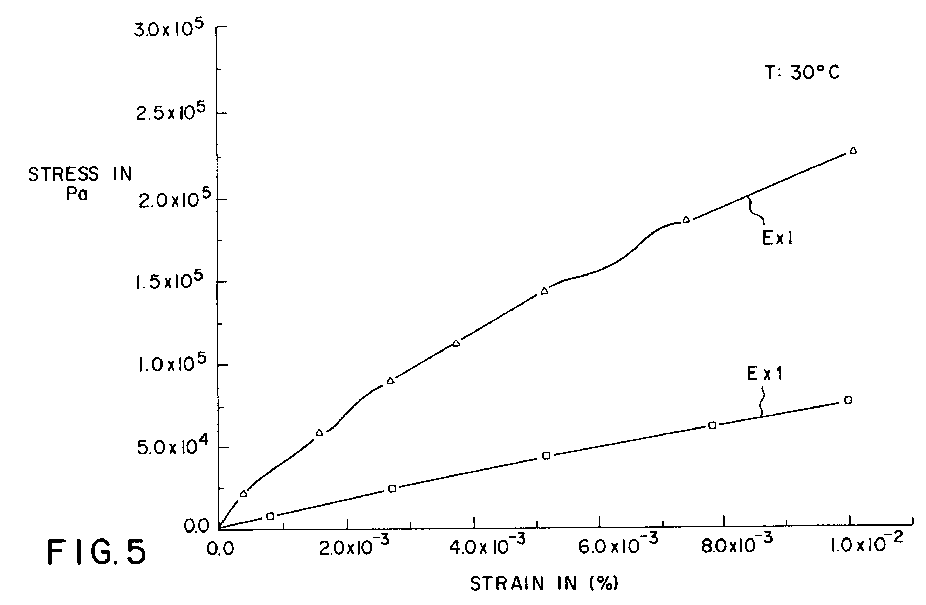

A stress/strain graph was established for each extruded composition. These graphs are shown in Figures 1 to 5.

As the figures clearly show, the products obtained from the compositions of the present invention exhibit an excessively large strain as soon as a low stress is applied, which demonstrates the exceptional flexibility character of the products obtained from the compositions of the invention, when compared with similar compositions of the prior art.

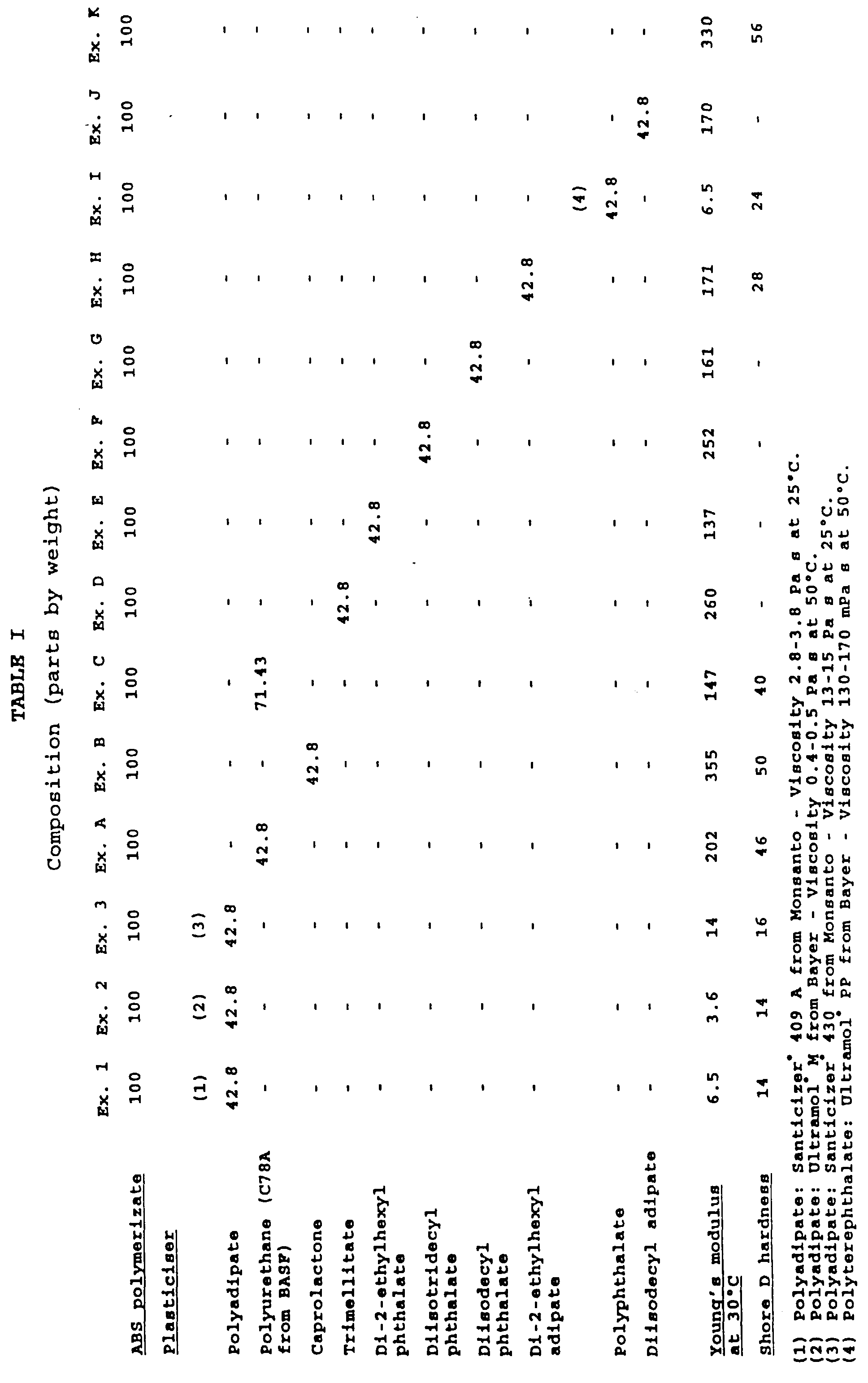

### Examples 4 to 7

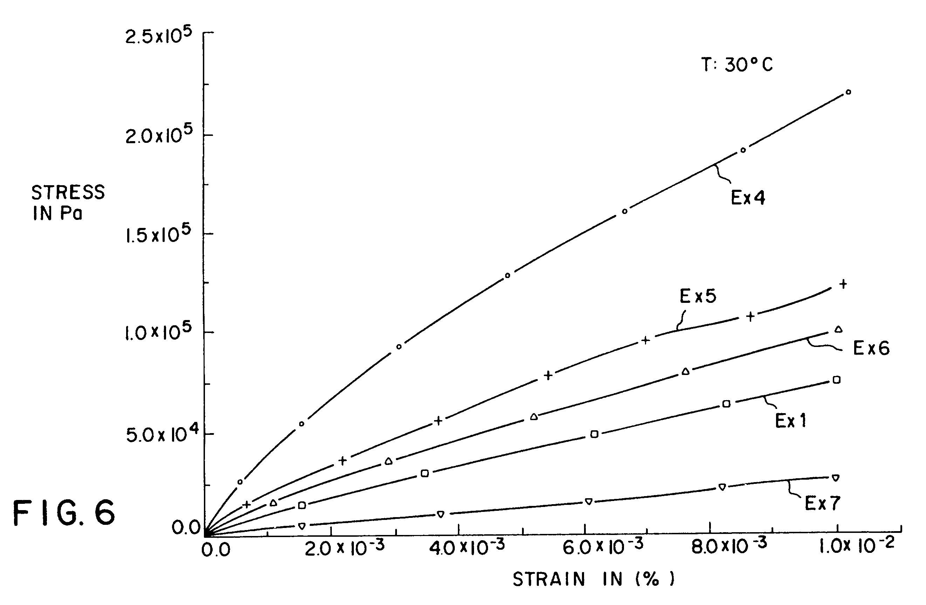

Compositions according to the invention with the ingredients and the quantities shown in Table II were prepared merely by mixing as in the preceding examples. As in the preceding examples, the compositions were extruded, the Young's moduli were measured and a stress/ strain graph was established. The graphs are shown in Figure 6.

**TABLE II**

| Composition (parts by weight) | | | | |
|---|---|---|---|---|
| | Ex. 4 | Ex. 5 | Ex. 6 | Ex. 7 |
| ABS polymerizate (Blendex 360) | 100 | 100 | 100 | 100 |
| Plasticizer | | | | |
| Polyadipate (Santicizer 409 A from Monsanto | 28 | 33 | 37 | 80 |
| Young's modulus (MPa) | 28 | 15 | 11 | 2.4 |

### Examples 8 to 15

The compositions shown in Table III below were prepared by mixing the ingredients in a Papenmeier type mixer at ambient temperature.

To produce tensile test pieces, sheets were calendered at a temperature of 205°C and with a calendering time of 5 minutes. The test pieces were cut out with a pneumatic punch cutter to satisfy DIN standard 52910. The pull speed was 100 mm/minute.

Discs of 4 mm thickness and 60 mm diameter were prepared for measuring Shore D hardness, by compression at 200°C for 5 minutes and 30 seconds, and then cooling for 2 minutes at a pressure of 200 bars.

**TABLE III**

| Composition (parts by weight) | | | | | | | | | |
|---|---|---|---|---|---|---|---|---|---|
| ABS polymerizate | Ex. 8 | Ex. 9 | Ex. 10 | Ex. 11 | Ex. 12 | Ex. 13 | Ex. 14 | Ex. 15 | Control |
| Blendex WX 160⁽¹⁾ | 80 | 80 | 80 | 100 | - | 80 | 80 | 80 | 80 |
| Blendex 260⁽²⁾ | 20 | 20 | 20 | - | 100 | 20 | 20 | 20 | 20 |
| Plasticizer | | | | | | | | | |
| Polyadipate⁽³⁾ | 10 | 15 | 20 | 15 | 15 | 20 | 20 | 5 | - |
| Blendex WX 270⁽⁴⁾ | - | - | - | - | - | - | - | | 20 |
| Other adjuvants | | | | | | | | | |
| Blendex 869⁽⁵⁾ | 3 | 3 | 3 | 3 | 3 | 3 | 3 | 3 | 3 |
| CaCO₃ | 3 | 3 | 3 | 3 | 3 | - | - | 3 | 3 |
| | | | | | | | | | |
| Talc M 15⁽⁶⁾ | - | - | - | - | - | 3 | - | - | - |
| | | | | | | | | | |
| Elongation % | 188 | 208 | 193 | 160 | 229 | 123 | 188 | 184 | 169 |
| Shore D hardness | 40 | 31 | 23 | 29 | 50 | 33 | 30 | 44 | 47 |

| | | | | | | | | | |
|---|---|---|---|---|---|---|---|---|---|
| (1) Poly(acrylonitrile/styrene/butyl acrylate) marketed by General Electric Company | | | | | | | | | |
| (2) Poly(acrylonitrile/butadiene/styrene) marketed by General Electric Company | | | | | | | | | |
| (3) Santicizer® 409 A from Monsanto | | | | | | | | | |
| (4) Poly(EPDM/acrylonitrile/styrene) General Electric Company | | | | | | | | | |
| (5) Poly(styrene/acrylonitrile) marketed by General Electric Company | | | | | | | | | |
| (6) Talc marketed by Luzenac | | | | | | | | | |

Table I shows that an appreciable increase in the elongation and a decrease in Shore D hardness are obtained and that consequently the product obtained is more flexible than the control, even with a quantity of polyadipate as low as 5 parts by weight.

### Examples 16 and 17 and comparative example L - Flexible foams

The compositions shown in Table IV were prepared by mixing.

**TABLE IV**

| Composition (parts by weight) | | | |
|---|---|---|---|
| | Ex. 16 | Ex. 17 | Ex. L |
| Blendex 360 | 93 | 93 | - |
| Blendex 869 | 7 | 7 | - |
| Santicizer 409 A | 40 | 40 | - |
| | | | |
| Azodicarbonamide | 0 | 3 | - |
| Sodium bicarbonate | 2 | - | - |
| Citric acid | 0.6 | - | - |
| | | | |
| PVC | - | - | 100 |
| | | | |
| Dialkyl phthalate | - | - | 35 |
| Butyl benzyl phthalate | - | - | 45 |
| Polybutylene, propylene glycol adipate | - | - | 35 |
| Azodicarbonamide | - | - | 2 |
| | | | |
| Accelerator | - | - | 2 |
| | | | |
| CaCO₃ | - | - | 5 |

The above compositions are extruded to form foam sheets which have the following characteristics:

| | Ex. 16 | Ex. 17 | Ex. L |
|---|---|---|---|
| Weight per unit area (g/m²) | 864 | 862 | 880 |
| Thickness (mm) | 1.40 | 1.35 | 1.40 |
| Relative density | 0.62 | 0.64 | 0.63 |
| Colour | White | Yellow | - |

50 mm × 100 mm test pieces formed from the sheets of the above examples are subjected to a tensile elongation test at 25°C at a rate of 10 mm/min.

The results are reported in Table V below.

**TABLE V**

| Elongation (%) | | | | | | |
|---|---|---|---|---|---|---|
| | Lengthwise direction | | | Transverse direction | | |
| | Ex. 16 | Ex. 17 | Ex. L | Ex. 16 | Ex. 17 | Ex. L |
| Stress (daN) | | | | | | |
| 1 | 15 | 9 | - | 12 | 9 | 8 |
| 2 | 49 | 30 | 11 | 43 | 31 | 12 |
| 3 | 98 | 59 | - | 92 | 61 | 22 |
| 4 | 151 | 100 | 27 | 154 | 110 | 30 |
| 5 | 225 | 145 | - | 204% at 4.5 daN | 160 | 34 |
| 6 | 300% at 5.6 daN | 199 | 41 | and break | 220 | 43 |
| 7 | and break | 260 | - | | 275% at 6.47 daN | 51 |
| 8 | | 300% at 7.64 daN | 57 | | and break | 60 |
| 10 | | and break | 74 | | | |
| 20 | | | 204 | | | 257% and break |
| 33 | | | 350% and break | | | |

Table V shows the exceptional flexibility of the foam sheets according to the present invention when compared with a conventional PVC foam sheet.

## Claims

1. Composition characterized in that it includes:
A - 100 parts by weight of an ABS polymerizate or of a blend of the latter; and
B - 5 to 100 parts by weight of a polyester corresponding to the formula: 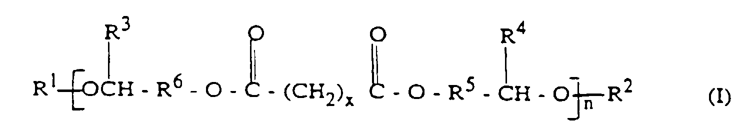 in which:
R¹ and R², which are identical or different, denote a hydrogen atom or a C₁-C₂₀ alkyl radical;
R³ and R⁴, which are identical or different, denote a hydrogen atom or a C₁-C₄ alkyl radical;
R⁵ and R⁶ denote C₁-C₆ alkylene radicals;
x is an integer from 1 to 4; and
n has a value such that the number-average molecular mass Mn, as measured by gel chromatography, is between 800 and 7000, preferably 1000 to 5000 and, better, 2000 and 3000.

2. Composition according to Claim 1, characterized in that R¹ and R² denote a C₁-C₁₀ alkyl radical.

3. Composition according to Claim 1 or 2, characterized in that R³ and R⁴ denote a hydrogen atom or a methyl radical.

4. Composition according to any one of Claims 1 to 3, characterized in that R⁵ is a C₁-C₆ polymethylene radical, preferably the -CH₂-CH₂- radical and R⁶ is a C₁-C₆ polymethylene radical, preferably the -CH₂- radical.

5. Composition according to any one of Claims 1 to 4, characterized in that x is equal to 4.

6. Composition according to Claim 1, characterized in that the polyester (B) corresponds to the formula: 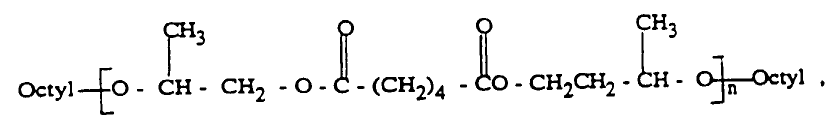 and has a number-average molecular mass Mn equal to 2700.

7. Composition according to any one of Claims 1 to 6, characterized in that the ABS polymerizate includes acrylonitrile-butadiene-styrene (ABS) polymerizates, acrylonitrile-styrene-methyl or butyl acrylate (ASA) polymerizates, styrene-butadiene rubber (SBR) polymerizates, acrylonitrile-butadiene rubber (NBR) polymerizates and mixtures thereof.

8. Composition according to any one of Claims 1 to 7, characterized in that the ABS polymerizate blend is chosen from the ABS polymerizate/SAN copolymer, ABS polymerizate/poly(butylene terephthalate), ABS polymerizate/ polyurethane, ABS polymerizate/polycarbonate, ABS polymerizate/polyamide, ABS polymerizate/poly(ethylene terephthalate), ABS polymerizate/poly(vinyl chloride), ABS polymerizate/polyolefin and ABS polymerizate/polyester blends.

9. Composition according to any one of the preceding claims, characterized in that it additionally includes one or more ingredients chosen from antioxidants, internal or external lubricants, flame retardants, dyes and pigments, UV stabilizers, antistatic agents, coupling agents, impact strength modifiers, reinforcing and extending fillers and odorants.

10. Flexible product obtained by extrusion, calendering, blow-extrusion, rotational moulding, injection moulding, compression moulding, transfer moulding or any other conventional process for converting a composition according to any one of Claims 1 to 9.

11. Product according to Claim 10, characterized in that it is in the form of a foam.

12. Composition for the manufacture of a flexible product in the form of a foam according to any one of Claims 1 to 9, characterized in that it includes 20 or more parts by weight of polyester of formula (I).

13. Composition according to Claim 12, characterized in that it includes 30 to 60 parts by weight of polyester of formula (I).

14. Composition according to Claim 11 or 12, characterized in that it includes an effective quantity of a chemical foaming agent.

15. Flexible product in the form of foam, obtained by extrusion, calendering, blow-extrusion, rotational moulding, injection moulding, compression moulding, transfer moulding or any other conventional process for converting a composition according to any one of Claims 12 to 14.

## Patentansprüche

1. Zusammensetzung, dadurch gekennzeichnet, dass sie einschließt:
A - 100 Gewichtsteile eines ABS-Polymerisats oder einer Mischung des letztgenannten und
B - 5 bis 100 Gewichtsteile eines Polyesters entsprechend der Formel: 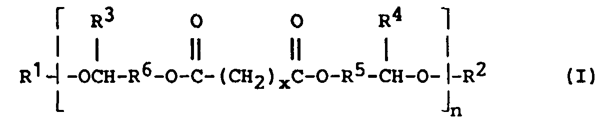 worin:
R¹ und R², die identisch oder verschieden sind, ein Wasserstoffatom oder einen C₁-C₂₀-Alkylrest bezeichnen;
R³ und R⁴, die identisch oder verschieden sind, ein Wasserstoffatom oder einen C₁-C₄-Alkylrest bezeichnen;
R⁵ und R⁶ C₁-C₆-Alkylenreste bezeichnen;
x eine ganze Zahl von 1 bis 4 ist und
n einen derartigen Wert hat, dass das Zahlenmittel des Molekulargewichtes, Mₙ, gemessen durch Gelchromatographie, zwischen 800 und 7.000, vorzugsweise 1.000 bis 5.000 und besser 2.000 bis 3.000, liegt.

2. Zusammensetzung nach Anspruch 1, dadurch gekennzeichnet, dass R¹ und R² einen C₁-C₁₀-Alkylrest bezeichnen.

3. Zusammensetzung nach Anspruch 1 oder 2, dadurch gekennzeichnet, dass R³ und R⁴ ein Wasserstoffatom oder einen Methylrest bezeichnen.

4. Zusammensetzung nach einem der Ansprüche 1 bis 3, dadurch gekennzeichnet, dass R⁵ ein C₁-C₆-Polymethylenrest, vorzugsweise der -CH₂-CH₂-Rest und R⁶ ein C₁-C₆-Polymethylenrest, vorzugsweise der -CH₂-Rest ist.

5. Zusammensetzung nach einem der Ansprüche 1 bis 4, dadurch gekennzeichnet, dass x gleich 4 ist.

6. Zusammensetzung nach Anspruch 1, dadurch gekennzeichnet, dass der Polyester (B) der Formel entspricht: 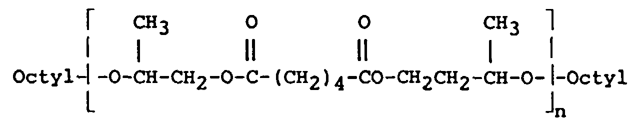 und ein Zahlenmittel des Molekulargewichtes Mₙ von 2.700 hat.

7. Zusammensetzung nach einem der Ansprüche 1 bis 6, dadurch gekennzeichnet, dass ABS-Polymerisat Acrylnitril-Butadien-Styrol (ABS)-Polymerisate, Acrylnitril-Styrol-Methyl- oder Butylacrylat (ASA)-Polymerisate, Styrol-Butadien-Kautschuk (SBR)-Polymerisate, Acrylnitril-Butadien-Kautschuk (NBR)-Polymerisate und Mischungen daraus einschließt.

8. Zusammensetzung nach einem der Ansprüche 1 bis 7, dadurch gekennzeichnet, dass die ABS-Polymerisatmischung ausgewählt aus der ist aus dem ABS-Polymerisat/SAN-Copolymer, ABS-Polymerisat/Poly(butylenterephthalat), ABS-Polymerisat/Polyurethan, ABS-Polymerisat/Polycarbonat, ABS-Polymerisat/Polyamid, ABS-Polymerisat/Poly(ethylenterephthalat), ABS-Polymerisat/Poly(vinylchlorid), ABS-Polymerisat/Polyolefin und ABS-Polymerisat/Polyester-Mischungen.

9. Zusammensetzung nach einem der vorhergehenden Ansprüche, dadurch gekennzeichnet, dass sie zusätzlich ein oder mehrere Bestandteile einschließt, ausgewählt aus Antioxidantien, internen oder externen Schmiermitteln, Entflammungshemmern, Farbstoffen und Pigmenten, UV-Stabilisatoren, antistatischen Mitteln, Kupplungsmitteln, die Schlagfzähigkeit modifizierenden Mitteln, verstärkenden und streckenden Füllstoffen und Geruchsstoffen.

10. Flexibles Produkt, erhalten durch Extrusion, Kalandrieren, Blasextrusion, Rotationsformen, Spritzguss, Kompressionsformen, Tranferpressen oder irgendein anderes konventionelles Verfahren zum Umwandeln einer Zusammensetzung gemäß einem der Ansprüche 1 bis 9.

11. Produkt nach Anspruch 10, dadurch gekennzeichnet, dass es in Form eines Schaumes vorliegt.

12. Zusammensetzung zu Herstellung eines flexiblen Produktes in Form eines Schaumes gemäß einem der Ansprüche 1 bis 9, dadurch gekennzeichnet, dass es 20 oder mehr Gewichtsteile des Polyesters der Formel (I) einschließt.

13. Zusammensetzung nach Anspruch 12, dadurch gekennzeichnet, dass sie 30 bis 60 Gewichtsteile des Polyesters der Formel (I) einschließt.

14. Zusammensetzung nach Anspruch 11 oder 12, dadurch gekennzeichnet, dass sie eine wirksame Menge eines chemischen Blähmittels einschließt.

15. Flexibles Produkt in Form von Schaum, erhalten durch Extrusion, Kalandrieren, Blasextrusion, Rotationsformen, Spritzgießen, Kompressionsformen, Transferpressen oder irgendein anderes konventionelles Verfahren zum Umwandeln einer Zusammensetzung gemäß einem der Ansprüche 12 bis 14.

## Revendications

1. Composition caractérisée en ce qu'elle comprend :
A - 100 parties en poids d'un polymérisat ABS ou d'un alliage de celui-ci ; et
B - 5 à 100 parties en poids d'un polyester répondant à la formule : 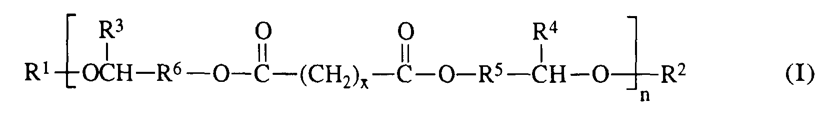 dans laquelle :
R¹ et R², identiques ou différents, représentent un atome d'hydrogène ou un groupe alkyle en C₁-C₂₀ ;
R³ et R⁴, identiques ou différents, représentent un atome d'hydrogène ou un groupe alkyle en C₁-C₄ ;
R⁵ et R⁶ représentent des groupes alkylène en C₁-C₆ ;
x est un nombre entier de 1 à 4 ; et
n a une valeur telle que la masse moléculaire moyenne en nombre Mn, telle que mesurée par chromatographie sur gel, va de 800 à 7000, de préférence de 1000 à 5000, et mieux de 2000 et 3000.

2. Composition selon la revendication 1, caractérisée en ce que R¹ et R² représentent un groupe alkyle en C₁-C₁₀.

3. Composition selon la revendication 1 ou 2, caractérisée en ce que R³ et R⁴ représentent un atome d'hydrogène ou un groupe méthyle.

4. Composition selon l'une quelconque des revendications 1 à 3, caractérisée en ce que R⁵ représente un groupe polyméthylène en C₁-C₆, de préférence le groupe -CH₂-CH₂- et R⁶ représente un groupe polyméthylène en C₁-C₆, de préférence le groupe -CH₂-.

5. Composition selon l'une quelconque des revendications 1 à 4, caractérisée en ce que x est égal à 4.

6. Composition selon la revendication 1, caractérisée en ce que le polyester (B) répond à la formule : 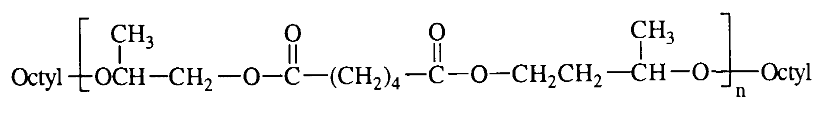 et a une masse moléculaire moyenne en nombre Mn égale à 2700.

7. Composition selon l'une quelconque des revendications 1 à 6, caractérisée en ce que le polymérisat ABS comprend les polymérisats acrylonitrile/butadiène/styrène (ABS), les polymérisats acrylonitrile/styrène/acrylate de méthyle ou de butyle (ASA), les polymérisats caoutchouteux styrène/butadiène (SBR), les polymérisats caoutchouteux acrylonitrile/butadiène (NBR), et leurs mélanges.

8. Composition selon l'une quelconque des revendications 1 à 7, caractérisée en ce que l'alliage de polymérisat ABS est choisi parmi les alliages polymérisat ABS/copolymère SAN, polymérisat ABS/poly(téréphtalate de butylène), polymérisat ABS/polyuréthanne, polymérisat ABS/polycarbonate, polymérisat ABS/polyamide, polymérisat ABS/poly(téréphtalate d'éthylène), polymérisat ABS/poly(chlorure de vinyle), polymérisat ABS/polyoléfine et polymérisat ABS/polyester.

9. Composition selon l'une quelconque des revendications précédentes, caractérisée en ce qu'elle comprend en outre un ou plusieurs ingrédients choisis parmi les antioxydants, les lubrifiants internes ou externes, les ignifugeants, les colorants et pigments, les stabilisants UV, les agents antistatiques, les agents de couplage, les agents de modification de la résistance au choc, les charges de renforcement et de dilution, et les agents odorants.

10. Produit souple obtenu par extrusion, calandrage, extrusion-soufflage, roto-moulage, moulage par injection, moulage par compression, moulage par transfert ou tout autre procédé classique de transformation d'une composition selon l'une quelconque des revendications 1 à 9.

11. Produit selon la revendication 10, caractérisé en ce qu'il est sous forme d'une mousse.

12. Composition pour la fabrication d'un produit souple sous forme d'une mousse selon l'une quelconque des revendications 1 à 9, caractérisée en ce qu'elle comprend 20 parties en poids de polyester de formule (I) ou davantage.

13. Composition selon la revendication 12, caractérisée en ce qu'elle comprend 30 à 60 parties en poids de polyester de formule (I).

14. Composition selon la revendication 11 ou 12, caractérisée en ce qu'elle comprend une quantité effective d'un agent moussant chimique.

15. Produit souple sous forme de mousse, obtenu par extrusion, calandrage, extrusion-soufflage, roto-moulage, moulage par injection, moulage par compression, moulage par transfert ou tout aure procédé classique de transformation d'une composition selon l'une quelconque des revendications 12 à 14.
